# EUROPEAN PATENT SPECIFICATION

(11) **EP 0 659 597 B1**
(45) Date of publication and mention of the grant of the patent: **08.10.1997**
(21) Application number: 94203544.5
(22) Date of filing: 06.12.1994
(51) Int. Cl.: B60C 25/138

(54) **For tyre removal machines in general, a device for facilitating the removal and the mounting of tyres from and onto respective wheel rims**
Vorrichtung zur Erleichterung des Demontierens und Montierens von Reifen auf und von Radfelgen
Dispositif pour faciliter le démontage et le montage de pneu d'une jante de roue, pour machines à démonter les pneux en général

(30) Priority: 22.12.1993 IT RE930090
(43) Date of publication of application: 28.06.1995
(73) Proprietor: SOCIETA'ITALIANA COSTRUZIONI ELETTROMECCANICHE S.I.C.E. S.p.A., 42015 Correggio (Reggio Emilia) (IT)
(72) Inventor: Toriselli, Franco, I-42015 Correggio (IT)
(74) Representative: Corradini, Corrado

(56) References cited:
- EP-A- 0 338 642
- DE-A- 4 006 037
- US-A- 3 522 832

## Description

This invention relates to a device for facilitating the mounting and removal of tyres onto and from respective wheel rims, such as to prevent damage to the tyre and under conditions of maximum safety for the operator.

As is well known, modern tyre removal machines, typically for automobile and other light vehicle wheels and for motorcycle wheels, comprise, inter alia, a usually horizontal self-centering unit provided for locking the wheel rims, and an overlying tool for mounting and removing the respective tyres, this acting between the edge of the wheel rim and the tyre bead. Said tool can be adjusted both vertically and horizontally, in order to adapt its operating position to wheel rims of different widths and diameters.

Specifically, said tool is supported by a vertical shaft slidingly mounted at the end of a horizontal arm branching from a column situated behind the self-centering unit.

A problem arising in such tyre removal machines is that of easily, rapidly and safely mounting and removing tyres onto and from the respective wheel rims.

With particular reference to their mounting, to position each bead of a tyre below the edge of a wheel rim locked onto the self-centering unit, at that moment stationary, the procedure is as follows.

Firstly, the bead is rested on the edge of the wheel rim, then the mounting tool is inserted between the rim and the bead, after which the bead is inclined in order to position below said tool and below said wheel rim edge that bead part which, with reference to the direction of rotation of the self-centering unit, lies downstream of said tool, and finally the self-centering unit is made to rotate, with the result that said mounting tool inserts the remaining (upstream) part of the bead below the wheel rim edge. However the mere action of the mounting tool can subject the bead to difficulties and/or excessive stresses, and hence to possible damage such as stretching, local weaknesses and cracking.

This is due to the fact that that bead part already inserted rests against its final seat without entering the wheel rim channel, which is of smaller diameter.

For these reasons, when mounting each individual bead the operator is required to thrust downwards that bead part gradually arriving below the edge of the wheel rim, in order to maintain it within the rim channel.

Said thrust action is normally exerted by hand, but in certain cases a lever has to be used, in particular if the beads are fairly rigid and hence particularly difficult to retain within the wheel rim channel.

However in addition to being laborious, this procedure has proved relatively dangerous because the operator is compelled to operate (by hand or via said lever) on parts under movement, and because the said operator often operates on greased surfaces (in order to facilitate bead insertion).

Similar problems also arise during tyre removal.

In this case in order to avoid damaging the tyre, in particular if rather rigid, the operator has to push against that part of the tyre which is still to leave the wheel rim and maintain it facing the rim channel, while using the bead lifting lever to place the bead on the removal tool.

Maintaining said bead part in said position is laborious when operating on the first bead (or upper bead), and is particularly difficult when operating on the second bead (or lower bead).

This is because in order to arrange the second bead in the removal configuration, the operator is required to support the tyre while at the same time operating the lever for lifting the bead onto the removal tool. Said operations are particularly difficult when the second bead has again engaged its receiving seat because of the tyre weight and/or the actions of the operator, who is hence compelled to use the lever to release said second bead. These operations are even more fatiguing in the case of wheels (rim + tyre) of sports type, ie with wheel rims which can be wider than their diameter.

Finally in the case of tyres of normal type the lever for positioning the bead on the removal tool can be operated from above by inserting it into the tyre, whereas in the case of tyres of sports type the lever is operated from below and outside the tyre.

The main object of the present invention is to provide a device able to solve the aforesaid problems within the context of a simple and rational construction.

A further object is to provide a device of universal application, able to be used in any type of tyre removal machine.

Said objects are attained by a device comprising an arm articulated about a vertical axis, of which one end is hinged on a vertical axis to a structure adjustable in height relative to the machine base, while its other end slidingly carries an implement defined in detail hereinafter, that arm part directly hinged to said height-adjustable structure having a length such that the articulation joint of said arm can be positioned coaxially to the self-centering unit.

The implement consists either of a thrust head able, when mounting the bead, to maintain facing the channel that part of it already inserted below the wheel rim edge, or a substantially horizontal bracket able, when removing the bead, to support the tyre from below with the bead positioned in front of the channel.

All the objects of the invention are attained by the aforesaid means, as will be apparent hereinafter.

The characteristics and constructional merits of the invention will be apparent from the accompanying figures, which illustrate a particular preferred embodiment thereof by way of non-limiting example.

Figure 1 is a perspective view of a tyre removal machine fitted with the invention, this latter being shown in its non-use position.

Figure 2 is a section on the line II-II of Figure 1 to an enlarged scale, with the invention shown at the commencement of a mounting stage.

Figure 3 is a section on the line III-III of Figure 2 to an enlarged scale.

Figure 4 is a section on the line IV-IV of Figure 2 to an enlarged scale.

Figure 5 is a perspective view showing the invention substantially at the end of a mounting stage.

Figure 6 is an elevation showing the invention during a removal stage.

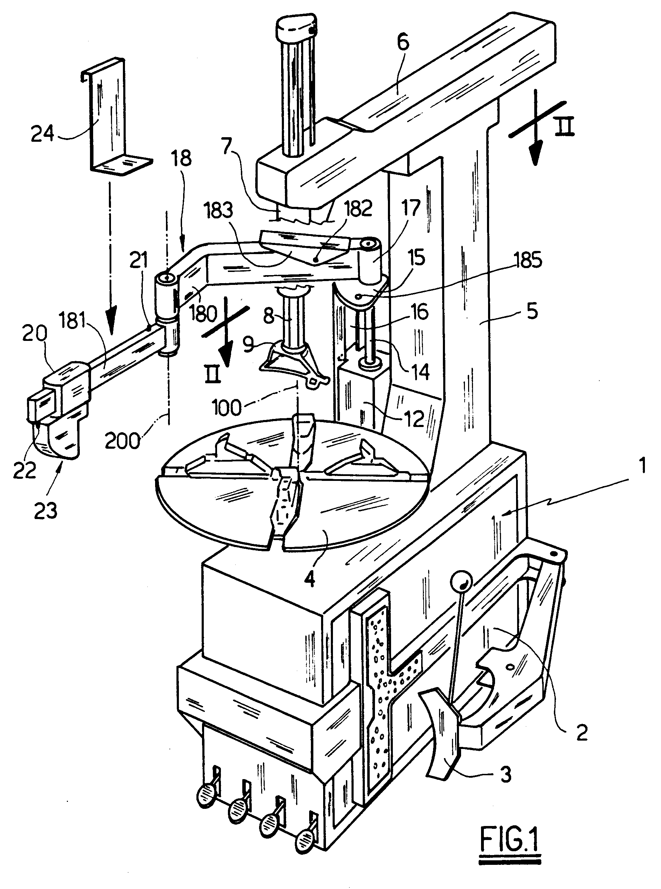

Said figures, and in particular Figure 1, show a tyre removal machine 1 of known tyre, comprising basically a base 2, a bead removal tool 3, a self-centering unit 4, a fixed rear column 5, a horizontal arm 6 slidingly mounted at the top of the column 5, a descending vertical tube 7 fixed to the front end of the arm 6, a prismatic shaft 8 slidingly mounted within said tube 7 but torsionally locked thereto, and a usual tool 9 fixed to the lower end of said shaft 8 for mounting and removing the tyre 10 onto and from the respective wheel rim 11.

Further constructional and operational details of the aforedescribed elements will not be given as they do not concern the present description and can be different from those shown.

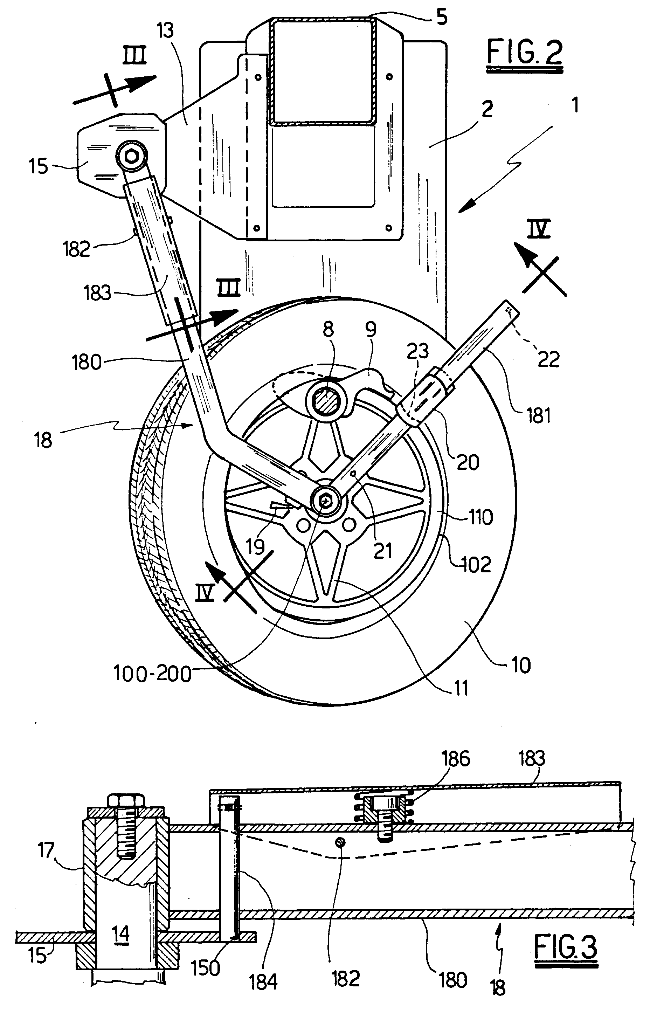

As can be seen, the device according to the invention comprises a hollow pillar 12 positioned to the side of the column 5 and provided with an intermediate projecting plate 13 for its fixing to the base (see Figure 2). Specifically, the plate 13 is fixed by the bolts used for fixing the column 5 onto the base 2.

The upper part of the pillar 12 contains, conveniently fixed thereto, the casing of a pneumatic double-acting cylinder-piston unit, not shown, of the through rod type.

The rod 14 of said unit passes beyond the upper end of the pillar 12 where it fixedly carries a transverse plate 15. From this latter there downwardly extends a vertical bar 16 contained in a respective guide and slide seat in the pillar 12. The purpose of said bar 16 is to prevent the rod 14 from bending and rotating about itself, the rod 14 passing above the plate 15 where it carries, hinged thereon by a bush 17, a horizontally lying articulated arm 18 of compass shape.

Specifically, said arm 18 comprises two elongate elements 180 and 181, of which the first 180 is hinged to the rod 14 as stated, and is bent at an obtuse angle, whereas the second 181 consists of a rectilinear body of rectangular cross-section. The dihedron defined by said element 180 is arranged such that it faces the axis 100 of rotation of the self-centering unit 4 when the invention is in its position of use (Figure 2).

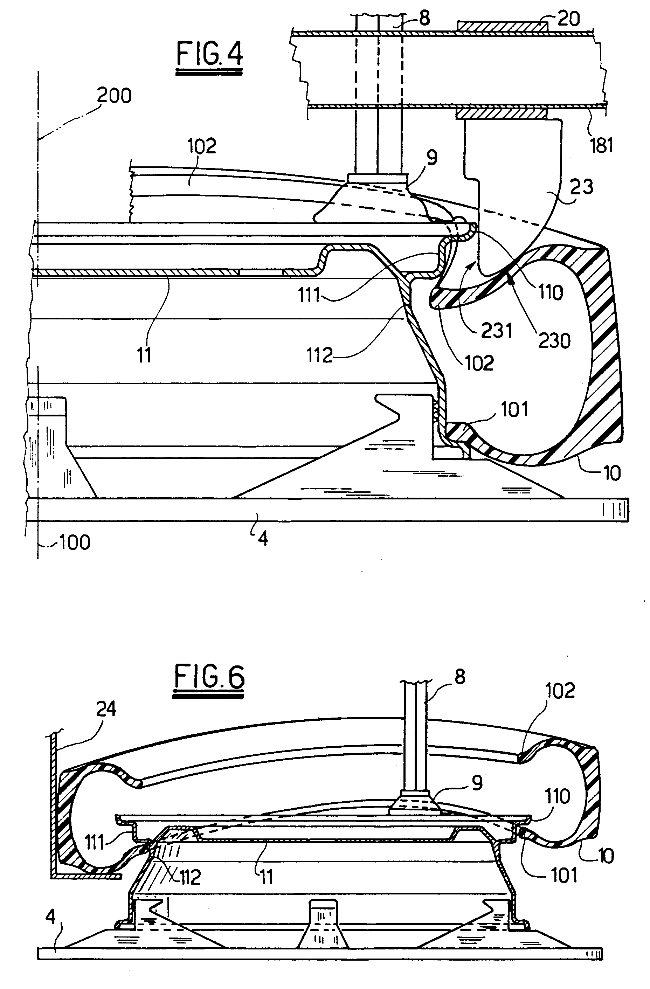

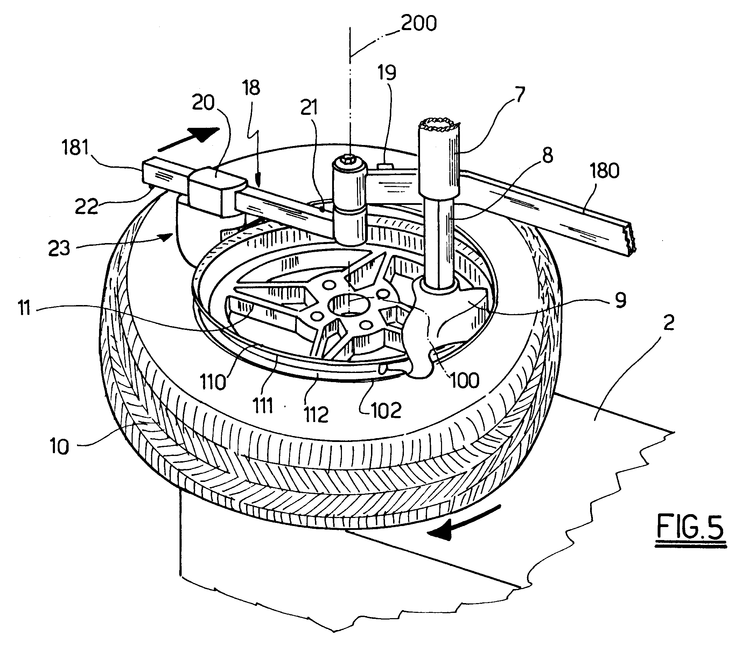

A lever 183 carrying a coupled vertical locking latch 184 is hinged to the element 180 on a horizontal transverse axis indicated by 182 (Figures 1, 3). The latch 184 lies above the plate 15 which comprises a respective engagement hole 185, the latch 184 being elastically urged towards said plate by a compressed spring 186 positioned between the element 180 and the lever 183 (Figure 3).

The two elements 180 and 181 are articulated on a vertical axis 200 the distance of which from the rod 14 is such that it is aligned with the axis 100 of rotation of the self-centering unit 4 (Figures 2, 4, 5) when said latch 184 is inserted into said hole 185. In addition, in proximity to said axis 200 the element 180 supports a lever-controlled valve 19 connected to the pneumatic circuit of the tyre removal machine 1, its purpose being to control the cylinder-piston unit which raises and lowers the articulated arm 18.

On the second element 181 of this latter a slider 20 is mounted torsionally locked but slidable between two limit stops indicated by 21 and 22 respectively, and provided lowerly with a thrust head 23. If necessary the head 23 can be replaced with a different head provided with the invention.

In the illustrated case the head 23 consists of a vertical flat body provided lowerly with a shaped portion 230 and having a lateral portion 231 which rests against the bead stop edge 110 of the wheel rim 11 (Figure 4). Said head 23 is formed from a convenient material not particularly rigid, for example a synthetic material such as nylon or teflon.

At this point it should be noted that the head 23 can be vertically positioned in a different manner from that shown. For example the element 180 can be directly hinged to the pillar 12 and the element 180 be provided with a cylinder-piston unit positioned on said axis 200, its rod supporting the element 181. Alternatively, between the slider 20 and head 23 there can be provided a cylinder-piston unit the rod of which is received in a longitudinal slot provided in the element 181.

Finally, as shown in Figures 1 and 6, an implement 24 for supporting the tyre 10 during tyre removal is removably associated with said element 181. It consists of a flat body, for example of sheet metal coated with a layer of synthetic material, which is shaped as a right angle and having its dihedron facing the self-centering unit 4 during use. The vertical flange of said right-angled body is bent outwards to form a sort of hook for mounting on said element 181 from above.

Alternatively the implement 24 can be fixed to the end of a horizontal arm (not shown) which at its other end is hinged to the aforesaid bar 16 on a vertical axis. Subordinately said swivel-mounted horizontal arm (not shown) supporting said implement 24 can be made to slide in height by a cylinder-piston unit different from that provided for raising and lowering the articulated arm 18.

The invention operates as follows.

To insert the first bead 101 (Figure 4) under the edge 110 of the wheel rim 11 the usual procedure is followed using the tool 9 and rotating the self-centering unit 4. The procedure for mounting the second bead is as follows.

As in the preceding case the bead 102 is inclined by the tool 9 by locating the bead under the tool. After this the arm 18 is turned until the latch 184 engages in the hole 185 (Figure 3), with the result that the axis 200 becomes coaxial with the axis 100 (Figures 2, 4).

The head 23 is then placed on that part of the bead 102 which is close to the tool 9 (Figure 2), and the rod 14 is lowered. Said lowering proceeds until said bead part is below the respective receiving seat 111 and facing the channel 112 of the wheel rim 11.

Finally the self-centering unit 4 is rotated, with the head 23 rotating rigid with the tyre 10 to maintain facing the channel 112 that bead part 102 progressively inserted below the edge 110 (see Figure 5).

As the head 23 is slidable on the element 181, during said rotation it automatically adjusts its position to the settling movements of the tyre.

After a rotation of substantially 180°, the bead 102 is completely mounted, after which the head 23 can be raised and the latch 184 be released.

To remove the upper bead 102 the head is positioned as in Figure 2 and lowered. This is to position in front of the channel 112 that bead part 102 lying close to the tool 9 and hence create a gap sufficient for passage of the usual bead lifting lever (not shown).

After this the head is raised, it is positioned preferably diametrically opposite the tool 9, and then lowered to bring the underlying bead part 102 facing the channel 112. During these two stages the axis 200 of the arm 18 may also not coincide with the axis 100 of the self-centering unit 4. Finally, using the bead lifting lever the bead is positioned on the tool 9 and the self-centering unit 4 is rotated after withdrawing the head 23.

To remove the lower bead 101, the implement 24 is set on the element 181 (Figure 1) in the position considered most convenient, and this latter is rotated towards the front of the tyre 10, so that the lower flange of the implement 24 becomes positioned below it. The arm 18 is then made to rise until the bead 101 is brought in front of the channel 112, the bead lifting lever is used to position the opposite part of the bead 101 on the tool 9 (Figure 6), and finally the self-centering unit 4 is rotated.

The merits and advantages of the invention are apparent from the aforegoing and from an examination of the accompanying figures.

The invention is not limited to that illustrated and described, but covers all technical equivalents and their combinations if implemented within the context of the following claims.

## Claims

1. A device for facilitating the mounting and removal of tyres (10) onto and from respective wheel rims (11) and intended to be associated with tyre removal machines (1) comprising a self-centering unit (4) of typically vertical axis (100) and a vertical prismatic rear rod (8) carrying a tool (9) for mounting and removing the tyre, characterised by an arm (18) articulated abort a vertical axis (200) and having one end (180) hinged on a vertical axis (14) to a structure adjustable in height relative to a base (2) of the machine (1), while its other end (181) carries slidingly mounted thereon an implement (23; 24) able to maintain facing the channel (112) in the wheel rim (11) that bead part (102) of the tyre to be mounted or removed which lies below the edge of the wheel rim, that one end (180) of the arm directly hinged to said height-adjustable structure having a length such that said vertical articulation axis (200) of the articulated arm (18) can be positioned coaxial to the self-centering unit (4), with the implement (23; 24), when in its working position, rotating rigidly with this latter.

2. A device as claimed in claim 1, characterised in that said height-adjustable structure consists of a vertical telescopic structure, such as a double-acting pneumatic cylinder-piston unit, which is fixed to said base (2).

3. A device as claimed in the preceding claims, characterised in that between said height-adjustable structure and the respective one end (180) of the articulated arm (18) there is interposed a latch (184), with relative release member, arranged to engage in a coupling seat (185) which establishes coaxiality between said vertical axes (200) and (100).

4. A device as claimed in claim 1, characterised in that said implement (23) consists of a thrust head which is fixed to an overlying slider (20) mounted on the other end (181) of said articulated arm (18), and comprises a lower shaped portion (230) arranged to rest against the bead to be mounted, and a lateral portion (231) arranged to rest against the edge (110) of the wheel rim (11).

5. A device as claimed in claims 1 and 4, characterised by being provided with a series of interchangeable heads.

6. A device as claimed in claim 1, characterised in that said implement (24) comprises a substantially horizontal bracket arranged to support the tyre (10) in order to maintain in front of the wheel rim channel the bead to be removed, and consisting of a flange of a right-angled body having its dihedron facing upwards, its other flange being provided at its rear with a seat for removably engaging that other end (181) of the arm (18) which supports a thrust head (23) of said implement.

## Patentansprüche

1. Vorrichtung zur Erleichterung des Montierens und Demontierens von Reifen (10) auf und von entsprechenden Radfelgen (11) und dafür vorgesehen, mit Reifendemontiermaschinen (1) verbunden zu werden, welche eine selbstzentrierende Einheit (4) von im wesentlichen vertikaler Achse (100) und eine vertikale, prismatische, hintere Stange (8) aufweist, welche ein Werkzeug (9) zum Montieren und Demontieren des Reifens trägt,
**gekennzeichnet durch**
einen Arm (18), welcher an einer vertikalen Achse (200) gelenkig aufgehängt ist und dessen eines Ende (180) an einer vertikalen Achse (14) mit einer Struktur gelenkig verbunden ist, die in der Höhe relativ zu einem Grundkörper (2) der Maschine (1) verstellbar ist, während sein anderes Ende (181) ein daran verschieblich befestigtes Arbeitsgerät (23;24) trägt, welches dazu in der Lage ist, dasjenige Wulstteil (102) des zu montierenden oder demontierenden Reifens festzuhalten, das sich unter dem Rand der Radfelge befindet, während es dem Kanal (112) in der Radfelge (11) gegenüberliegt, wobei dasjenige Ende (180) des Armes, welches direkt mit der höhenverstellbaren Struktur verbunden ist, eine Länge derart aufweist, daß die vertikale Gelenkachse (200) des gelenkigen Armes (18) koaxial zu der selbstzentrierenden Einheit (4) positionierbar ist, und wobei das Arbeitsgerät (23;24) mit demselben starr rotiert, wenn es sich in seiner Arbeitsposition befindet.

2. Vorrichtung nach Anspruch 1,
**dadurch gekennzeichnet,** daß
die höhenverstellbare Struktur aus einer vertikalen, teleskopartigen Struktur aufgebaut ist, wie eine doppeltwirkende pneumatische Zylinder-Kolben-Einheit, welche mit dem Grundkörper (2) verbunden ist.

3. Vorrichtung nach den vorhergehenden Ansprüchen,
**dadurch gekennzeichnet,** daß
zwischen der höhenverstellbaren Struktur und dem entsprechenden einen Ende (180) des gelenkigen Armes (18) ein Schnappelement (184) mit einem entsprechenden Löseglied angeordnet ist, welches dafür vorgesehen ist, in einen Verbindungssitz (185) einzugreifen, welcher eine Koaxialität zwischen den vertikalen Achsen (200) und (100) herstellt.

4. Vorrichtung nach Anspruch 1,
**dadurch gekennzeichnet,** daß
das Arbeitsgerät (23) aus einem Druckkopf besteht, welcher an einem darüberliegenden Schieber (20) befestigt ist, welcher am anderen Ende (181) des gelenkigen Armes (18) angeordnet ist, und welcher einen flach geformten Bereich (230) beinhaltet, der so angeordnet ist, daß er sich gegen den zu montierenden Wulst stützt, und einen Seitenbereich (231), der so angeordnet ist, daß er sich gegen den Rand (110) der Radfelge (11) stützt.

5. Vorrichtung nach Anspruch 1 und 4,
**dadurch gekennzeichnet,** daß
sie mit einer Reihe von austauschbaren Köpfen versehen ist.

6. Vorrichtung nach Anspruch 1,
**dadurch gekennzeichnet,** daß
das Arbeitsgerät (24) eine im wesentlichen horizontale Bremse aufweist, welche dafür vorgesehen ist, den Reifen (10) zu stützen, und zwar um den zu demontierenden Wulst vor dem Radfelgen-Kanal zu halten, und welche aus einem Flansch mit einem rechtwinkligen Körper besteht, dessen rechter Winkel bzw. Zweiflach nach oben gerichtet ist, wobei sein anderer Flansch an seinem hinteren Bereich mit einem Sitz zum lösbaren Eingreifen in das andere Ende (181) des Armes (18) versehen ist, welcher einen Druckkopf (23) des Arbeitsgerätes trägt.

## Revendications

1. Dispositif pour faciliter le montage de pneumatiques (10) sur des jantes de roue (11) ainsi que respectivement leur retrait de ces jantes, et qui est destiné à être associé à des machines (1) de retrait de pneumatique comprenant une unité (4) d'auto-centrage comportant de façon typique un axe vertical (100) et une tige arrière prismatique verticale (8) portant un outil (9) destiné au montage et au retrait du pneumatique, le dispositif étant caractérisé en ce qu'il comporte un bras (18) articulé autour d'un axe vertical (200) ayant l'une de ses extrémités (180) articulée sur un axe vertical (14) à une structure ajustable en hauteur par rapport à une embase (2) de la machine (1), tandis que son autre extrémité (181) porte, monté en coulissement sur lui, un accessoire (23 ; 24) susceptible de maintenir le canal (112) formé dans la jante (11) de la roue en face de cette partie de talon (102) du pneumatique qui doit être montée ou retirée et qui est située en-dessous du bord de la jante de la roue, en ce que la première extrémité (180) du bras qui est directement articulée à ladite structure ajustable en hauteur a une longueur telle que ledit axe d'articulation vertical (200) du bras articulé (18) peut être positionné coaxialement à ladite unité (4) d'auto-centrage, avec l'accessoire (23 ; 24) lorsqu'il est dans sa position de travail, tournant solidairement avec ce dernier.

2. Dispositif selon la revendication 1, caractérisé en ce que ladite structure ajustable en hauteur est constituée d'une structure télescopique verticale, telle qu'une unité cylindre-piston pneumatique à double action, qui est fixée à ladite embase (2).

3. Dispositif selon l'une des revendications précédentes, caractérisé en ce que entre ladite structure ajustable en hauteur et la première extrémité respective (180) du bras articulé (18) est interposé un verrou (184) avec un organe de libération relatif disposé de façon à venir en engagement dans un siège d'accouplement (185) qui établit la coaxialité entre lesdits axes verticaux (200) et (100).

4. Dispositif selon la revendication 1, caractérisé en ce que ledit accessoire (23) est constitué par une tête de poussée qui est fixée à un chariot (20) qui le coiffe monté sur l'autre extrémité (181) dudit bras articulé (18), et il comprend une partie (230) conformée inférieure disposée de façon à reposer contre le talon qui doit être monté, et une partie latérale (231) disposée de façon à reposer contre le bord (110) de la jante (11) de la roue.

5. Dispositif selon les revendications 1 et 4, caractérisé en ce qu'il comporte une série de têtes interchangeables.

6. Dispositif selon la revendication 1, caractérisé ence que ledit accessoire (24) comprend une console sensiblement horizontale disposée de façon à supporter le pneumatique (10) de manière à maintenir devant le canal de la jante de la roue le talon qui doit être retiré, et étant constitué d'un flasque, d'un corps à angle droit avec son dièdre faisant face vers le haut, son autre flasque étant pourvu sur son arrière, d'un siège destiné à venir en engagement de façon amovible avec cette autre extrémité (181) du bras (18) qui supporte une tête de poussée (23) dudit accessoire.
